# EUROPEAN PATENT APPLICATION

(11) **EP 4 718 670 A1**
(43) Date of publication of application: **01.04.2026**
(21) Application number: 25199080.0
(22) Date of filing: 29.08.2025
(51) Int. Cl.: H02J 7/00, A63F 13/98

(54) **CHARGING SYSTEM FOR A VR HEADSET AND ASSOCIATED CONTROLLERS**

(30) Priority: 25.09.2024 US 202463699139 P; 21.08.2025 US 202519306093
(71) Applicant: Meta Platforms Technologies, LLC, Menlo Park, CA 94025 (US)
(72) Inventor: Desai, Saraubh Mahendra, Menlo Park (US); Chabria, Rahul, Menlo Park (US); Sorensen, Richard Andrew, Menlo Park (US); Geng, Tianyi, Menlo Park (US); Torris, Anthony, Menlo Park (US)
(74) Representative: Murgitroyd & Company

(57) **Abstract**

An apparatus, system and method for charging a mixed reality headset and one or more controllers is provided. The charging apparatus in one example includes a base, including a top surface, a sidewall and a bottom surface. The sidewall is oriented between the top surface and bottom surface. The bottom surface defines a conduit arrangement configured to house a cord. The conduit arrangement comprises a first conduit portion, a second conduit portion, and a cavity region, wherein the first conduit portion extends from a first conduit end to the cavity region and the second conduit portion extends from the cavity region to a second conduit end. A first controller dock and second controller dock are mounted to the base. An electronic circuit oriented in the base can be configured to regulate charging of the first controller dock and the second controller dock.

## Description

### TECHNICAL FIELD

This application generally relates to a charging apparatus for charging a headset and controllers. The described charging apparatus is more specifically for charging mixed-reality headsets, and the controllers associated with such headsets.

### BACKGROUND

A desirable aspect of mixed-reality headsets comprises the ability to move autonomously without being tethered to a power source via an external power cable or charging cable during use. Mixed-reality headsets and controllers with batteries must be re-charged after prolonged periods of use and it is desirable for the user to be able to conveniently charge the headset and controllers together. While some charging devices exist, the charging devices may not sufficiently account for spacing needs during placement as well as cord management to facilitate engagement to the power sources. Further, a potential charging system may seek to consider geometry, weight, weight distribution, etc. of the components of the mixed-reality system, quick and convenient mounting and dismounting of the components of the mixed-reality system, and others.

### SUMMARY

The subject disclosure provides for an apparatus and system for managing a cord length and charging apparatus.

According to a first aspect, there is provided a charging apparatus, comprising: a base, including a top surface, a sidewall and a bottom surface, wherein the sidewall is oriented between the top surface and bottom surface, wherein the bottom surface defines a conduit arrangement configured to house a cord, the conduit arrangement including: a first conduit portion, a second conduit portion, and a cavity region, wherein the first conduit portion extends from a first conduit end to the cavity region and the second conduit portion extends from the cavity region to a second conduit end; a first controller dock mounted to the base and configured for receiving and charging a first controller; and a second controller dock mounted to the base and configured for receiving and charging a second controller.

The first controller dock may be positioned above the top surface. The second controller dock may be positioned above the top surface

The charging apparatus may further comprise an electronic circuit configured to regulate charging of the first controller dock and the second controller dock. The bottom surface of the base may define a first charging port and a second charging port. The electronic circuit may comprise a processor.

The first charging port may be configured to engage a power cord in electrical communication with a power source. The second charging port may be configured to engage an auxiliary power cord in electrical communication with a mixed reality headset.

The top surface and bottom surface of the base may be concentric and configured to rotate independently of each other around a base axis.

The base may comprise a counterweight. The counterweight may be in addition to the top surface and the bottom surface of the base.

The first controller dock may be configured to be pivotable at a first engagement point where the first controller dock is coupled to the base. The second controller dock may be configured to be pivotable at a second engagement point wherein the second controller dock is coupled to the base.

At least one of the first controller dock and the second controller dock may comprise a locking mechanism to maintain a rotated position when at least one of the first controller dock and the second controller dock is pivoted at the first engagement point or second engagement point.

The base may further include a plurality of lights. The plurality of lights may include: a first light operatively associated with the first controller and configured for indicating a first controller charge status of the first controller, and a second light operatively associated with the second controller dock, positioned adjacent to the second controller dock along a weighted base, and configured for indicating a second controller charge status of the second controller.

The bottom surface in proximity to the cavity region may comprise at least one protrusion oriented at an offset distance from a charging port to facilitate retracting a power cord or an auxiliary cord into the cavity region.

The first controller dock may be further configured to position the first controller through a gravity-hold mechanism. The second controller dock may be further configured to hold the second controller through a gravity-hold mechanism.

The first controller dock may further include slip-resistant material configured to position the first controller. The second controller dock may further include slip-resistant material configured to position the second controller.

The first conduit end and second conduit end may be oriented at opposing ends of the conduit arrangement.

At least one of the first conduit portion or the second conduit portion may be arranged to traverse a path in the bottom surface. The path may comprise a curved region. The path may comprise an angled region.

The first conduit end may be defined by the sidewall and the first conduit end comprising an engagement surface dimensioned to constantly engage an exterior surface of a power cord or auxiliary cord and the second conduit end is defined by the sidewall and the first conduit end comprising an engagement surface dimensioned to constantly engage an exterior surface of a power cord exterior surface or an auxiliary cord exterior surface.

The first controller dock may further include a non-stick material configured to position the first controller. The second controller dock may further include a non-stick material configured to position the second controller.

The first controller dock and the second controller dock may be configured to charge to the first controller and the second controller wirelessly.

### BRIEF DESCRIPTION OF THE DRAWINGS

For a better understanding of the various described aspects, reference should be made to the Detailed Description below, in conjunction with the following drawings.
FIG. 1 illustrates a perspective view of the charging apparatus.
FIG. 2 illustrates a front view of the charging apparatus.
FIG. 3 illustrates a side partial cross-sectional view of the charging apparatus.
FIG. 4 illustrates a bottom view of the charging apparatus.
FIG. 5 illustrates a bottom view of the charging apparatus with cords.
FIG. 6 illustrates an alternative example of the charging apparatus with cords.
FIG. 7 illustrates a second alternative example of the charging apparatus with cords.
FIG. 8 illustrates an exploded view of the charging apparatus.
FIG. 9 provides a method of performing steps of some examples of the charging apparatus.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, consistent with common practice, like reference numerals may be used to denote like features throughout the specification and figures.

### DETAILED DESCRIPTION

Numerous details are described herein to provide a thorough understanding of the examples illustrated in the accompanying drawings. However, some examples may be practiced without some of the specific details. Furthermore, well-known processes, components, and materials have not necessarily been described in exhaustive detail so as to avoid obscuring pertinent aspects of the examples described herein.

Embodiments of this disclosure may include or be implemented in conjunction with various types or embodiments of mixed-reality systems. Mixed-reality, as described herein, is any superimposed functionality and/or sensory-detectable presentation provided by a mixed-reality system within (or rendered to appear on top of) a user's physical surroundings. Such mixed-realities may include and/or represent virtual reality (VR), augmented reality (AR) or some combination and/or variation of one of these. For example, a user may perform a swiping in-air hand gesture to cause a song to be skipped by a song-providing API providing playback at, for example, a home speaker. In some embodiments of an AR system, ambient light (e.g., a live feed of the surrounding environment that a user would normally see) may be passed through a display element of a respective head-wearable device presenting aspects of the MR system. In some embodiments, ambient light may be passed through respective aspects of the AR system. For example, a visual user interface element (e.g., a notification user interface element) may be presented at the head-wearable device, and an amount of ambient light (e.g., 15-50% of the ambient light) may be passed through the user interface element, such that the user may distinguish at least a portion of the physical environment over which the user interface element is being displayed. The term "mixed reality" or "MR" as used herein may refer to a form of reality that has been adjusted in some manner before presentation to a user, which may include, e.g., virtual reality (VR), augmented reality (AR), extended reality (XR), hybrid reality, or some combination and/or derivatives thereof. Mixed reality content may include completely generated content or generated content combined with captured content (e.g., real-world photographs). The mixed reality content may include video, audio, haptic feedback, or some combination thereof, any of which may be presented in a single channel or in multiple channels (such as stereo video that produces a three-dimensional (3D) effect to the viewer). Additionally, in some embodiments, mixed reality may be associated with applications, products, accessories, services, or some combination thereof, that are, e.g., used to interact with content in an immersive application. The mixed reality system that provides the mixed reality content may be implemented on various platforms, including a head-mounted display (HMD) connected to a server, a host computer system, a standalone HMD, a mobile device or computing system, a "cave" environment or other projection system, or any other hardware platform capable of providing mixed reality content to one or more viewers. Mixed reality may be equivalently referred to herein as "artificial reality."

"Virtual reality" or "VR," as used herein, refers to an immersive experience where a user's visual input is controlled by a computing system. "Augmented reality" or "AR" as used herein refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. AR also refers to systems where light entering a user's eye is partially generated by a computing system and partially composes light reflected off objects in the real world. For example, an AR headset could be shaped as a pair of glasses with a pass-through display, which allows light from the real world to pass through a waveguide that simultaneously emits light from a projector in the AR headset, allowing the AR headset to present virtual objects intermixed with the real objects the user can see. The AR headset may be a block-light headset with video pass-through. "Mixed reality" or "MR," as used herein, refers to any of VR, AR, XR, or any combination or hybrid thereof.

In certain aspects, safety and privacy protocols are implemented so that the user understands user eye data is obtained by the system. The user is informed in advance of the purpose for obtaining of the eye data, and may at any time opt out of the eye data being obtained. In certain aspects, the user may delete any past eye data stored by the system. Users who proceed with using the system may be notified that respective eye-movement data is being obtained for the purpose of determining pupil location as a representation of focusing direction of the user's eyes to more efficiently generate a foveated view in that respective direction.

Mixed-reality content may include completely generated content or generated content combined with captured (e.g., real-world) content. The mixed-reality content may include video, audio, haptic events, or some combination thereof, any of which may be presented in a single channel or in multiple channels (such as stereo video that produces a three-dimensional effect to a viewer). Additionally, in some embodiments, mixed reality may also be associated with applications, products, accessories, services, or some combination thereof, which are used, for example, to create content in mixed reality and/or are otherwise used in (e.g., to perform activities in) mixed reality.

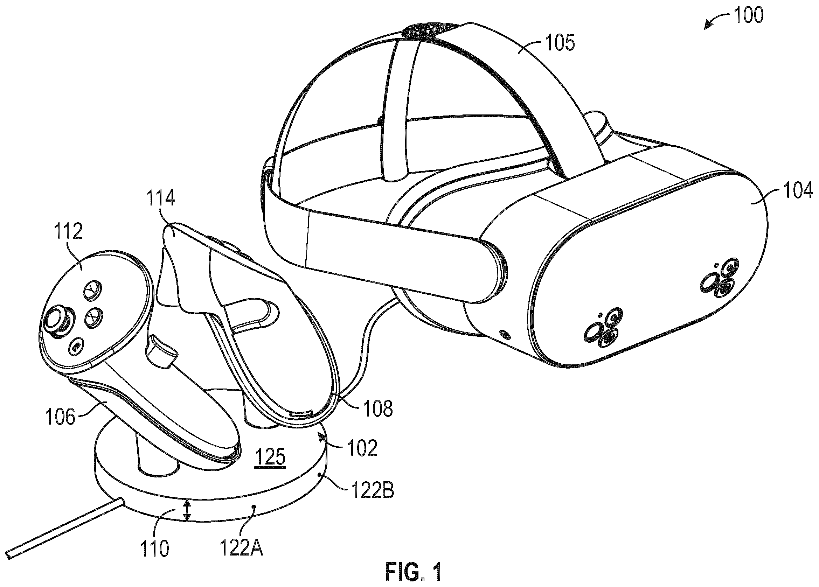

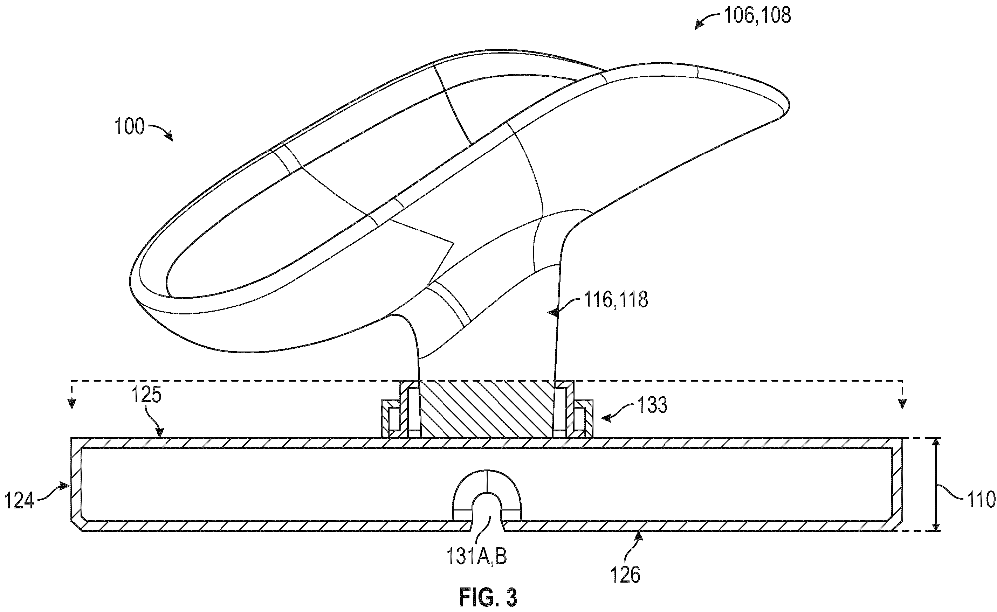

FIG. 1 shows an isometric view of the charging apparatus 100. Charging apparatus 100 includes a base 102, controller dock 106 (which may be referred to as a first controller dock), and controller dock 108 (which may be referred to as a second controller dock). Base 102 has a thickness or height 110, top surface 125, and lights 122A-122B.
Controller 112 can be mounted on controller dock 106. Controller 114 can be mounted on controller dock 108. Base 102 can comprise a substantially circular base wherein the base of the controller docks are symmetrically equidistant from the center of the base 102, wherein other geometric shapes for the base are considered. As depicted in FIG. 3, controller docks 106, 108 are configured to receive at least a portion of controllers 112, 114 and charge the respective controllers. In some examples, controller dock 106 is configured to receive a first controller and controller dock 108 is configured to receive a second controller. In some examples, the first controller dock 106 can receive the second controller 114 and the second controller dock 108 can receive the first controller 112.The charging apparatus can also be configured to charge a head-wearable device 104. Head-wearable device 104 includes head band 105 (which may also be referred to as a strap and is used to secure the head-wearable device to a user's head when the mixed-reality headset is being used by the user).

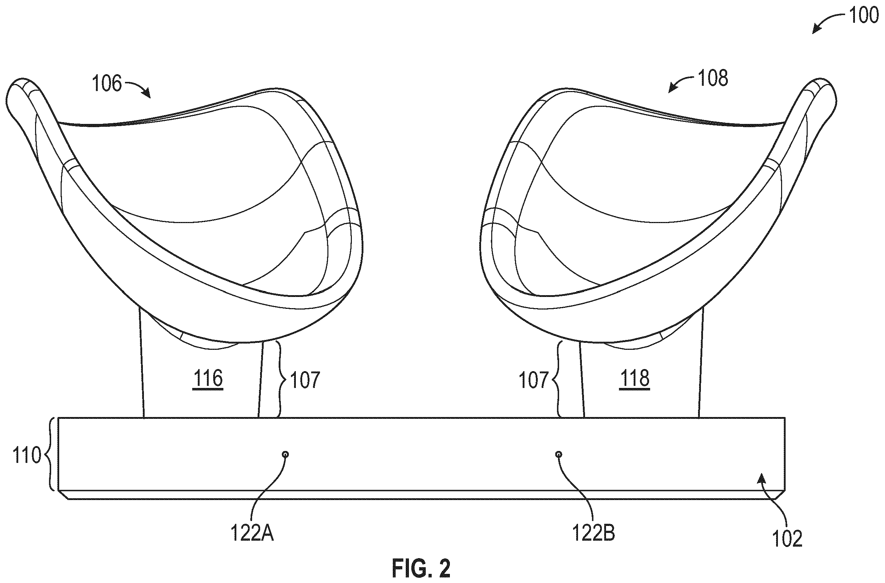

As depicted in FIG. 2, controller dock 106 is attached to the base 102 through post 116. Controller dock 108 is attached to base 102 through post 118. Controller docks 106 and 108 are positioned such that the bottom surface of controller dock 106 and the bottom surface of controller dock 108 are separated from, and above, the top surface 125 of base 102, such that an air gap 107 is created between the controller docks 106, 108 and the base 102. The gap 107 separates the bottom portion of the controller docks 106, 108 from the top surface 125 of the base 102.

The lights 122A-122B may be used to indicate charge status of the respective components being charged by the charging apparatus 100. For example, light 122A may indicate the charge status of a controller charging on controller dock 106 and light 122B may indicate the charge status of a controller charging on controller dock 108 charging on the base 102. In other examples, instead of including two separate lights 122A-122B, the charging apparatus 100 may including an alphanumeric display that indicates respective charge levels for each respective device in one place (e.g., a name of each device alongside a percentage charge level of that device) or may include a circular light display divided into thirds such that each third of the circular light display provides an indication of charge status for a respective device. Another light display may comprise a plurality of lights that successively light up in correspondence to the level of charge. In yet a further aspect, the alphanumeric display can indicate a charging status of headset device 104.

As shown in FIG. 3, a partial cross-sectional view of the apparatus 100 demonstrates a potential telescoping fixture 133. The air gaps 107 can be of a same size, but other examples are also contemplated in which the air gaps may be differently sized for each post 116, 118. In one aspect, the posts 116, 118 can further be configured with the telescoping fixture 133 wherein the posts can be lengthened or shortened. When the posts 116, 118 are lengthened from the base using the telescoping feature, the air gap 107 is increased and conversely when the telescoping fixture is shortened, the air gap 107 is decreased. Certain internal features of or within base 102 (e.g., support members, circuitry wires, etc.) have been omitted. As shown in the cross-sectional view, a portion of the bottom surface 126 and a sidewall 124 extending between the top surface 125 and bottom surface 126 can define a conduit aperture 131.

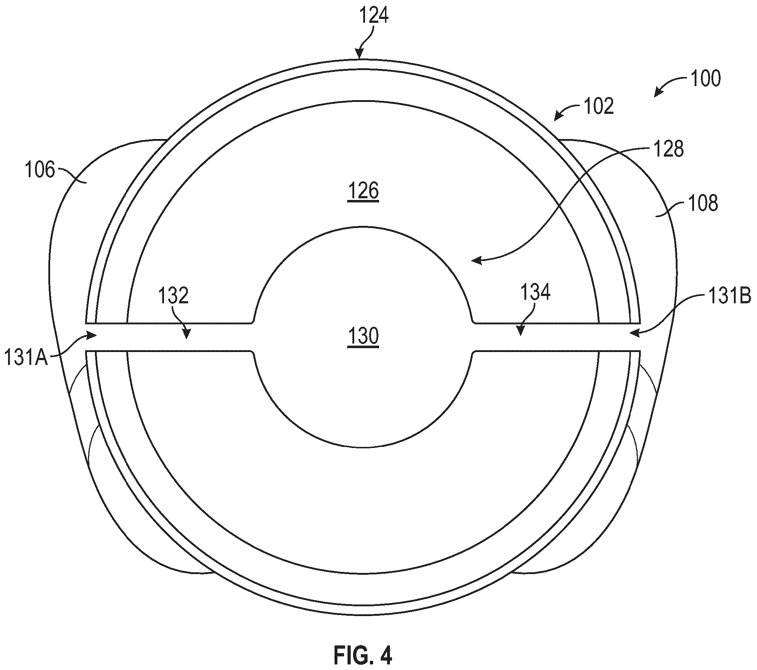

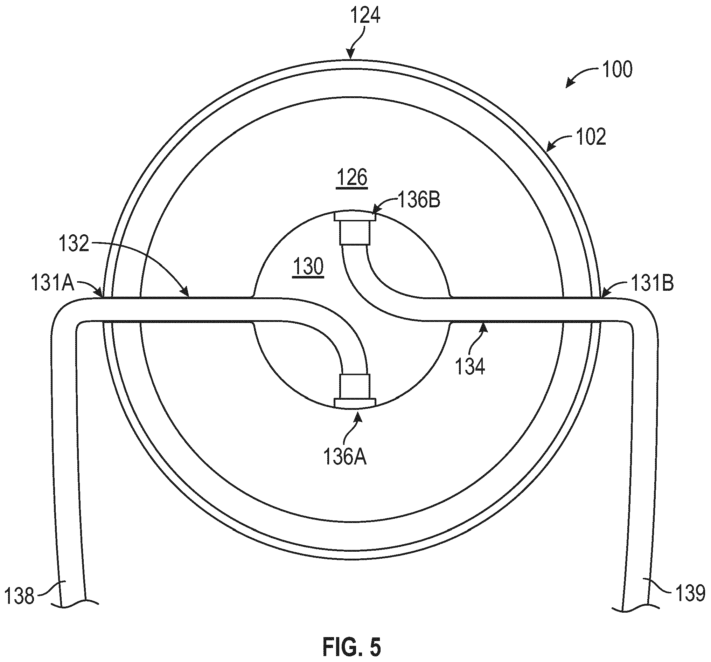

As depicted in FIG. 4, a bottom view of the base 102 is illustrated wherein the bottom surface 126 comprises a conduit arrangement 128. The conduit arrangement 128 traverses a pathway through the bottom surface 126 of the base 102. The conduit arrangement can comprise a first portion 132 of the conduit arrangement 128. The first conduit portion 132 of the conduit arrangement 128 can extend between the exterior sidewall 124 of the base and a cavity 130. Access to the first conduit portion 132 can be provided by a first conduit aperture 131A defined by the exterior sidewall 124. The second conduit portion 134 of the conduit arrangement 128 can extend between the cavity 130 and another region of the exterior sidewall at a second conduit aperture 131B. The first conduit aperture 131A and the second conduit aperture 131B can be sized to constantly engage an exterior surface of the power cord or an exterior surface of the auxiliary cord. As depicted in FIG. 5, power cords can be inserted into the first portion 132 of the conduit arrangement and the second conduit portion 134. In a further aspect, a power cord 138, electrically coupled to the power source, can be passed through the first conduit aperture 131A into the first conduit portion 132 and terminated at one of the charging ports 136A, 136B oriented on a portion of the bottom surface wall. In a further aspect, the charging ports 136A, 136B can be oriented in a sidewall of the cavity 130. The charging ports 136A, 136B can be configured to receive an electrical connector at the terminal ends of a power cord 138 or auxiliary cord 139. The charging ports can be further configured to receive either of the power cord 138 or auxiliary cord 139. Accordingly, during a charging cycle an electrical current flows from the power source via the power cord. The power cord 138 can be connected and supply power to either of the charging ports 136A, 136B. The electrical power received at the charging port 136A, 136B can supply power to the controllers. In a further aspect, a terminal connector of the auxiliary power cord 139 can be coupled to a charging port 136A, 136B, and the auxiliary power cord 139 can extend through the second conduit portion 134, exiting the base 102 via the second conduit aperture 131B.

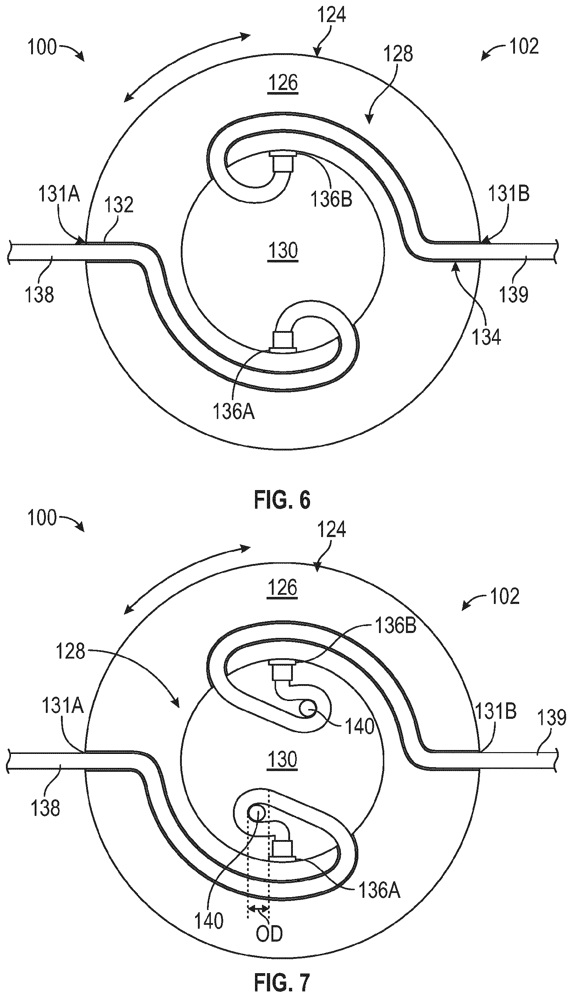

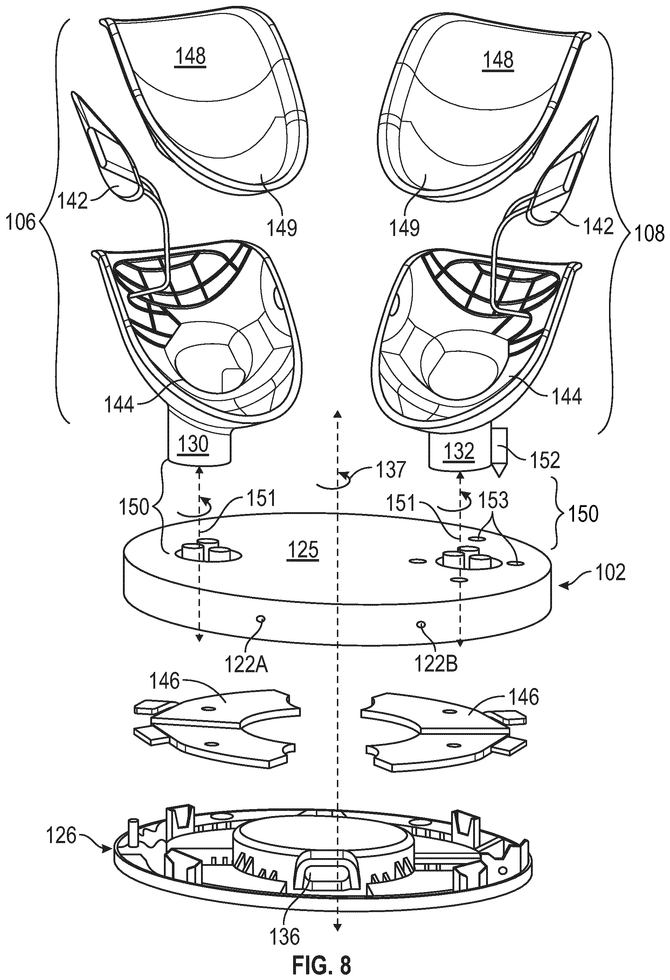

As depicted in FIG. 6 and FIG. 7, the first conduit portion 132 and the second conduit portion 134 can comprise a curved region. In yet another example, the first conduit portion 132 and the second conduit portion 134 can comprise an angled region. The examples wherein the conduit arrangement 128 comprises a combination of curved regions and angular regions allows the power cord 138 coupled to the power source and the auxiliary cord 139 coupled to the mixed reality headset to be wound into the cavity 130. A concentric orientation between the top surface 125 and bottom surface 126 permits the top surface and bottom surface to rotate independently relative to each other. For example, when the bottom surface 126 is rotated relative to the top surface around the base axis 137, depicted in FIG. 8, the length of either cord can be pulled into the cavity 130. The winding functionality with respect to the cords can be facilitated by one end of each cord being engaged to the charging ports 136A and 136B, which anchors the cords.

While winding the cords, the top surface 125 can be held stationary or rotated clockwise, while the bottom surface 126 is rotated counterclockwise. In contrast, the cord lengths can be extended by rotating the bottom surface 126 clockwise relative to the base 102 being held stationary or rotated counter-clockwise. It should be understood in other configurations that the rotations between the top surface 125 and the bottom surface 126 to either retract or extend the cords from the base 102 may be in opposite directions from previously detailed. In another example, as depicted in FIG. 7, the bottom surface 126 can comprise a base protrusion 140 that extends from the bottom surface adjacent to the cavity 130. In one aspect, the base protrusion 140 can be oriented an offset distance (OD) from the charging ports 136A and 136B. The offset distance can comprise a length dimension oriented away from being directly in front of the charging ports 136A and 136B, as depicted in FIG. 7. The offset distance-arrangement between the base protrusion 140 and charging port 136 can function as a pulling-force constraint by changing the cord path within the cavity 130 in proximity to the connection point between a cord connector and charging port. This change in cord path increases the pulling force required to disconnect a cord-connector from the charging port, which can mitigate an unintentional disconnection between a cord connector and the charging port. In a further aspect, the base protrusion 140 can comprise a hook feature to further constrain the cord.

FIG. 8 is an exploded view of the charging apparatus 100. In some examples, the weighted base has at least two controller docks 106, 108. The controller docks can be configured to provide an electrical communication between the controller docks and the controller via a charging mechanism 142. In one aspect, the charging mechanism 142 conducting the electrical communication between the docks 106, 108 and controllers 112, 114 can comprise a physical connection between the docks and controllers. For example, a section of the controller dock interface surface 148 can comprise an electrical connector configured to engage with a reciprocal electrical connector in the controller. In another aspect, the charging mechanism 142 conducting the electrical communication between the docks 106, 108 and controllers 112, 114 can be wireless. The wireless charging of the controllers may be conducted using a non-Qi compliant charging mechanism, such as a charging mechanism that uses coils that are non-planar (e.g., coils that curve around the housing of the controller's handle and also curve around a portion of the controller dock that is holding the controller). In some examples, the wireless charging of the controllers may be conducted using a Qi compliant charging mechanism. In another aspect, the controller docks 106, 108 may be configured to receive, position, and charge components with a magnetic coupling structure 144. In other examples, the controller docks 106, 108 may be configured to receive, position, and charge components without the use of a magnetic coupling structure.

In some examples, the controller dock interface surface 148 can include slip-resistant material that is configured to hold the controllers in place in the controller docks 106, 108. This material may assist with aligning the appropriate portion of the controller with the appropriate portion of the controller interface surface 148. The slip resistant surface also assists with ensuring an appropriately snug fit in the controller dock and assists with ensuring the controllers do not slip and remain engaged with the controller dock interface surface. Example materials may include rubber or other friction enhancing materials. In addition to a particular material, an exterior controller dock interface surface 148 can comprise a textured surface to enhance tactile grip or friction. In alternate examples, the controller dock interface surface 148 can comprise a non-stick surface comprising a non-stick material that enables a controller to efficiently and effectively slide into place. In another example, the controller dock interface surface can comprise a gravity-hold mechanism.

In some examples, the gravity-hold mechanism comprises a geometric shape of the controller dock and controller such that the center of gravity of the controller is designed to self-correct and come to rest in a desired point or location on the controller dock. As depicted in FIG. 8, a cup section 149 proximate to a bottom region of the controller docks 106, 108 can engage and buttress a portion of the respective controllers 112, 114. The cup section 149 can further mitigate controllers from sliding out of the control dock. The edges and contours of the controller docks 106, 108 can be shaped to facilitate automatic controller alignment. In some examples, the optimal area of the controller dock at which the center of gravity comes to rest is a circular area with a diameter of between 0.1-3 mm. In some examples, the area is larger, for example between 2-10 mm. In some examples, the optimal area is rectangular such that it covers a horizontal (or vertical, diagonal, etc.) portion of the controller dock.

A controller dock 106, 108 may be mounted to the weighted base 102. The mass of the base 102 can be increased by the use of counterweights 146. The counterweights 146 can be symmetrically oriented around the base axis 137. The weight in the base may be located at one or more locations that act to counterbalance the weight of the controllers. The counterweight 146 may also be distributed in many other ways. In some examples, the amount of weight added to the base can be between 200-600 grams.

In a further aspect, the engagement between the posts 116, 118 and the top surface of the base can comprise an engagement coupling 150. The engagement coupling 150 can comprise pivoting coupling that allows the docks to pivot around a secondary axis 151. In a further aspect, the engage coupling 150 can include a locking mechanism 152. The locking mechanism 152 can be used to fix a rotated controller dock 106, 108 in a desired position. In another aspect, the locking mechanism 152 can comprise a ratchet mechanism that maintains a desired rotation of the controller dock. Another locking mechanism 152 can comprise a spring loaded plunger oriented at the bottom of the posts 116, 118, wherein during rotation to a desired position, the spring loaded plunger can engage and disengage from circular arrangement of divots 153, the divots being oriented around the posts 116, 118 in the top surface 125 of the base.

In some examples, the base includes one or more lights. In some examples, the lights are used to indicate the charging status of one or more of the components. In some examples, the lights are LEDs. In some examples, there are at least two lights. A first light indicates the charging status of the first controller dock or the controller charging therein, and a second light indicates the charging status of the second controller dock or the controller charging therein. In some examples, the lights may change color based on the charging status of the associated component-for example, a red light may indicate that a component is out of battery (e.g., less than 10%), an orange light may indicate that a component is charging, and a green light may indicate that a component has a fully charged battery (e.g., more than 95% charge). Other lights and corresponding charge levels and statuses are also contemplated. The lights may also indicate charge status through more than just the color, including flashes, or a certain flashing rhythm. These lights may also be used to indicate more than just charge status. For example, they may be used to indicate that a component is not properly seated in the docks, and that an update is available for the charging apparatus or the components being charged. Still other examples may include one or more lights to indicate that the internal battery of the component is nearing the end of its lifespan or that other maintenance is required. In an alternate example, the base may comprise a third light to provide charging indications similar to the controller docks.

In some examples, one or more lights may further be configured for many other purposes. For example, the charging apparatus may include circuitry configured to connect wirelessly or through metal contacts or otherwise-to the controllers. The charging apparatus may be configured through the one or more lights to display a message to the user through colored or flashing lights, or through text. The headset may be configured to recognize or be programmed to store multiple user profiles. The charging apparatus may be configured to include text recognizing and acknowledging a certain user, for example with a message-WELCOME USER 1. Other examples may include when a user puts the controllers back on the charging apparatus, the charging apparatus may include text or another message communicating achievements or other information to the user.

Some examples may make use of one light that indicates an aggregate charging status for the headset as well as the two different controllers, e.g., an average of all three or a weighted average of all three. In some examples, one or more LEDs may flash if a foreign object is detected. For example, if an object or device is detected, but the object or device is not the correct device-e.g., a non-compatible HMD is placed in the HMD charger, a non-compatible controller is placed on the controller dock, a left controller is placed on the charger for the right controller-the LED associated with the dock on which a foreign or incompatible device was placed may flash one or more colors or with one or more flashing cadences. In some examples, one or more LEDs may flash or display one or more colors or one or more flashing cadences if one or more components (e.g., HMD or controllers) are not properly aligned on the charging contacts or components of the charging apparatus (e.g., controller docks). In some examples, one or more LEDs may flash if the power from a charging cable or other power source is too high or too low. In some examples, the optimal range for power supply to the charging base is between 13-33 Watts. In some examples, a solid light will appear when charging. In some examples, a flashing light with a different flashing cadence (e.g., slower flashing) from a flashing light when an error exists (e.g., foreign objects are detected, too much or too little power, etc.) can appear when the system is properly charging one or more of the corresponding components of a controller or HMD. In some examples a solid light will appear when a corresponding component is fully charged. In some examples, the flashing cadences or colors are configurable by the user or manufacturer.

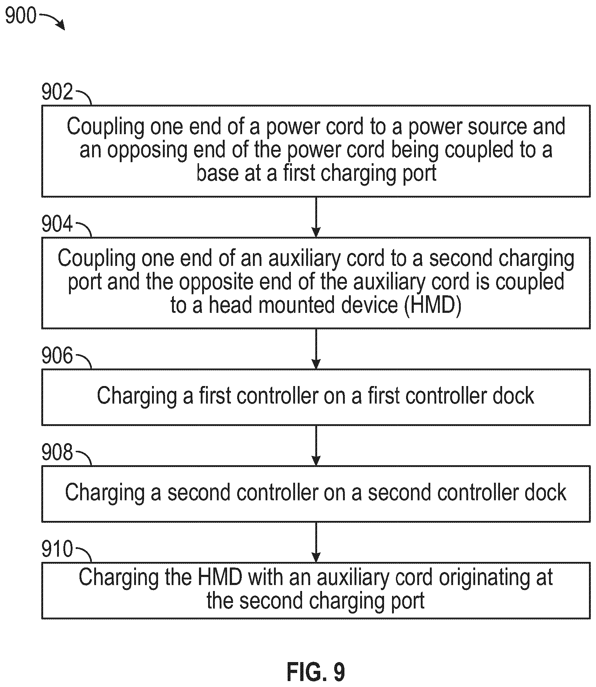

FIG. 9 provides a process 900 of performing steps of some examples of the charging apparatus. In step 902, the process comprises coupling one end of a power cord to a power source and an opposing end of the power cord to a base at a first charging port. In step 904, the process comprises coupling one end of an auxiliary cord to a second charging port and the opposite end of the auxiliary cord to an HMD. In step 906, a first controller that is mounted to a base is charged on a first controller dock that is mounted to the base. In step 908, a second controller is charged on a second controller dock. In a step 910, the HMD can be charged from the auxiliary cord originating at the second charging port.

As described herein, a processor (e.g., a central processing unit (CPU) or microcontroller unit (MCU)), is an electronic component that is responsible for executing instructions and controlling the operation of an electronic device (e.g., a head-wearable device, a handheld intermediary processing device HIPD, or other computer system). There are various types of processors that may be used interchangeably or specifically required by examples described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., virtual-reality animations, such as three-dimensional modeling); (iv) a field-programmable gate array (FPGA) that can be programmed and reconfigured after manufacturing and/or customized to perform specific tasks, such as signal processing, cryptography, and machine learning; and (v) a digital signal processor (DSP) designed to perform mathematical operations on signals such as audio, video, and radio waves. One of skill in the art will understand that one or more processors of one or more electronic devices may be used in various examples described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; and (iii) system-on-a-chip (SoC) controllers that integrate multiple components such as processors, memory, I/O interfaces, and other peripherals into a single chip; and/or DSPs. As described herein, a graphics module is a component or software module that is designed to handle graphical operations and/or processes, and can include a hardware module and/or a software module. The electronic components can also comprise electronic circuitry that can be oriented in the base. These electronic components can be configured to regulate charging of the controllers.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include: (i) profile data, including user account data, user settings, and/or other user data stored by the user; (ii) sensor data detected and/or otherwise obtained by one or more sensors; (iii) media content data including stored image data, audio data, documents, and the like; and (iv) application data, which can include data collected and/or otherwise obtained and stored during use of an application; and/or any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) POGO pins, which may be small, spring-loaded pins configured to provide a charging interface; (v) wireless charging interfaces; (vi) global-position system (GPS) interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device); (ii) biopotential-signal sensors; (iii) inertial measurement unit (e.g., IMUs) for detecting, for example, angular rate, force, magnetic field, and/or changes in acceleration; (iv) heart rate sensors for measuring a user's heart rate; (v) SpO2 sensors for measuring blood oxygen saturation and/or other biometric data of a user; (vi) capacitive sensors for detecting changes in potential at a portion of a user's body (e.g., a sensor-skin interface) and/or the proximity of other devices or objects; and (vii) light sensors (e.g., **ToF** sensors, infrared light sensors, or visible light sensors) and/or sensors for sensing data from the user or the user's environment. As described herein, biopotential-signal-sensing components are devices used to measure electrical activity within the body (e.g., biopotential-signal sensors). Some types of biopotential-signal sensors include: (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) electromyography (EMG) sensors configured to measure the electrical activity of muscles and diagnose neuromuscular disorders; and (iv) electrooculography (EOG) sensors configured to measure the electrical activity of eye muscles to detect eye movement and diagnose eye disorders.

As described herein, an application stored in a memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications; (x) camera applications; (xi) web-based applications; (xii) health applications; and (xiii) mixed-reality (AR) applications, and/or any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). In some examples, a communication interface can refer to a software layer that enables different software programs to communicate with each other (e.g., application programming interfaces (APIs) and protocols such as HTTP and TCP/IP).

Any data collection performed by the devices described herein and/or any devices configured to perform or cause the performance of the different examples described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt-in or opt-out of any data collection at any time. Further, users are given the option to request the removal of any collected data.

It will be understood that, although the terms "first," "second," etc. may be used herein to describe various elements, these elements should not be limited by these terms. These terms are only used to distinguish one element from another.

The terminology used herein is for the purpose of describing particular examples only and is not intended to be limiting of the claims. As used in the description of the examples and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific examples. However, the illustrative discussions above are not intended to be exhaustive or to limit the claims to the precise forms disclosed. Many modifications and variations are possible in view of the above teachings. The examples were chosen and described in order to best explain principles of operation and practical applications, to thereby enable others skilled in the art.

## Claims

**1.** A charging apparatus, comprising:
a base, including a top surface, a sidewall and a bottom surface, wherein the sidewall is oriented between the top surface and bottom surface, wherein the bottom surface defines a conduit arrangement configured to house a cord, the conduit arrangement including:
a first conduit portion,
a second conduit portion, and
a cavity region, wherein the first conduit portion extends from a first conduit end to the cavity region and the second conduit portion extends from the cavity region to a second conduit end;
a first controller dock mounted to the base and configured for receiving and charging a first controller; and
a second controller dock mounted to the base and configured for receiving and charging a second controller.

**2.** The charging apparatus of claim 1, wherein the first controller dock is positioned above the top surface, and the second controller dock is positioned above the top surface

**3.** The charging apparatus of claim 1 or 2, further comprising an electronic circuit configured to regulate charging of the first controller dock and the second controller dock, wherein the bottom surface of the base defines a first charging port and a second charging port;
preferably wherein the first charging port is configured to engage a power cord in electrical communication with a power source and the second charging port is configured to engage an auxiliary power cord in electrical communication with a mixed reality headset.

**4.** The charging apparatus of any preceding claim, wherein the top surface and bottom surface of the base are concentric and configured to rotate independently of each other around a base axis.

**5.** The charging apparatus of any preceding claim, wherein the base comprises a counterweight, wherein the counterweight is in addition to the top surface and the bottom surface of the base.

**6.** The charging apparatus of any preceding claim, wherein the first controller dock is configured to be pivotable at a first engagement point where the first controller dock is coupled to the base and the second controller dock is configured to be pivotable at a second engagement point wherein the second controller dock is coupled to the base;
preferably wherein at least one of the first controller dock and the second controller dock comprises a locking mechanism to maintain a rotated position when at least one of the first controller dock and the second controller dock is pivoted at the first engagement point or second engagement point.

**8.** The charging apparatus of any preceding claim, wherein the base further includes a plurality of lights, wherein the plurality of lights includes: a first light operatively associated with the first controller and configured for indicating a first controller charge status of the first controller, and a second light operatively associated with the second controller dock, positioned adjacent to the second controller dock along a weighted base, and configured for indicating a second controller charge status of the second controller.

**9.** The charging apparatus of any preceding claim, wherein the bottom surface in proximity to the cavity region comprises at least one protrusion oriented at an offset distance from a charging port to facilitate retracting a power cord or an auxiliary cord into the cavity region.

**10.** The charging apparatus of any preceding claim, wherein the first controller dock is further configured to position the first controller through a gravity-hold mechanism; and the second controller dock is further configured to hold the second controller through a gravity-hold mechanism;
preferably wherein the first controller dock further includes slip-resistant material and/or a non-stick material configured to position the first controller; and the second controller dock further includes slip-resistant material and/or a non-stick material configured to position the second controller.

**11.** The charging apparatus of any preceding claim, wherein the first conduit end and second conduit end are oriented at opposing ends of the conduit arrangement.

**12.** The charging apparatus of any preceding claim, wherein at least one of the first conduit portion or the second conduit portion is arranged to traverse a path in the bottom surface, wherein the path comprises a curved region.

**13.** The charging apparatus of any preceding claim, wherein at least one of the first conduit portion or the second conduit portion is arranged to traverse a path in the bottom surface, wherein the path comprises an angled region.

**14.** The charging apparatus of any preceding claim, wherein the first conduit end is defined by the sidewall and the first conduit end comprising an engagement surface dimensioned to constantly engage an exterior surface of a power cord or auxiliary cord and the second conduit end is defined by the sidewall and the first conduit end comprising an engagement surface dimensioned to constantly engage an exterior surface of a power cord exterior surface or an auxiliary cord exterior surface.

**15.** The charging apparatus of any preceding claim, wherein the first controller dock and the second controller dock are configured to charge to the first controller and the second controller wirelessly.
